# EUROPEAN PATENT APPLICATION

(11) **EP 1 745 970 A1**
(43) Date of publication of application: **24.01.2007**
(21) Application number: 05077676.4
(22) Date of filing: 29.11.2005
(51) Int. Cl.: B60K 15/03, F17C 13/04

(54) **Toroidal tank**

(30) Priority: 01.12.2004 PL 37148204
(71) Applicant: "Stako" sp. Jawna, 76-200 Slupsk (PL)
(72) Inventor: Kubicz, Stanislaw, 76-256 Sycewice (PL); Wojciechowicz, Pawel, 76-200 Slupsk (PL)
(74) Representative: Niburska, Danuta

(57) **Abstract**

The invention solves the problem of the toroidal tank for liquid propane butane gas with the construction, which enables installation of the required elements with economic external outline.

An opening (2) has been made in the casing (1) for the valve block (3).
The valve block (3) consists of the box made uniform with a bottom (6).

There are four openings (8), (9), (10) and (11) for individual valves made in the bottom (6). The valve block (3) is covered with a lid (14) whose top plate is even or slightly higher than the top part (15) of the tank.

## Description

A toroidal tank is the object of the invention. The particular application of the tank comprises its installation in automotive vehicles for the liquid gas - propane butane.

Toroidal tanks are known from the patent descriptions EP 0 969 242 and FR 2 756 516, where little heads for attachments consisting of "U' shaped boxes are fixed in upper or bottom outer planes of the casings of the tanks under consideration.

The plane of the outlet of the little head is, in the already known tanks, perpendicular to the horizontal axis of the tanks.
Such location of the head is disadvantageous for the location of the whole tank, which is usually installed in the cavity for a spare wheel. The little head, however, is an element in which the required attachments are fixed so the whole tank, along with its attachments, needs more space.

In order to limit the space occupied by the tank, construction solutions aimed at placement of little heads in 'comer' parts of the tanks.

In tanks designed for very powerful engines, additional pumps are applied, which are used for complete discharge of the fuel from the tank as well fuel intake under even higher pressure.
Such pumps are mounted inside the tanks.

The tank known from the patent description WO 97/03856 is equipped with a pump mounted inside. To place the pump inside the tank, the little head for attachments has no bottom, which would constitute an integral part of the side surface of the little head.
The bottom of the tank under consideration is fixed as a separate part of the little head and has elements, which enable its frequent installation and removal.

There is also a toroidal tank known from the claim EP 0 969 243 with the head which constitutes a valve block consisting of a box made as a uniform part which is covered with a lid.

The box is situated in the opening of the plane of the tank casing in its top part where the lid is situated horizontally in relation to the horizontal axis of the tank.

A big fragment of the valve block (box) protrudes outside the outline of the outer vertical plane of the tank.

There is a toroidal tank from the claim EP 1 327 816 A2 which has the valve block consisting of a box whose side surface is borders the rim of the opening made in the tank casing.

The bottom of the tank is equipped with one opening for a single multi-valve

The rim of the opening for the valve block is at its length at an angle in relation to the horizontal axis of the tank.

The principle of the invention comprises the fact that the toroidal tank with an opening for the valve block which consists of a uniform box with an opening in the bottom with a cylindrical side surface bordering the rim of the opening made in the tank casing, is characterized by the bottom of the valve block equipped with four separate openings for installation of valves, especially a refueling valve, a safety valve, a fuel intake valve and fuel level gauge valve.

The rim of the opening in the tank casing which for its connection with the valve block has the lowest protruding part, which is horizontal and parallel to the horizontal axis of the tank.

The sidewall of the valve block has ventilation holes.
The lid of the valve block is even or slightly higher than the horizontal top plane of the tank.

The bottom of the valve block has a vertical pipe for fuel intake reaching approximately the bottom of the tank and fixed to the fuel intake valve. It is also equipped with a bended pipe of the safety valve and its free end is situated approximately in the middle of the tank valve block height.

The toroidal tank, pursuant to the invention, features the outer outline economically fit to the installation space. The valve block is constructed as to safeguard safe and functional installation of the elements necessary for the vehicle operation with fuel such as liquid propane butane.

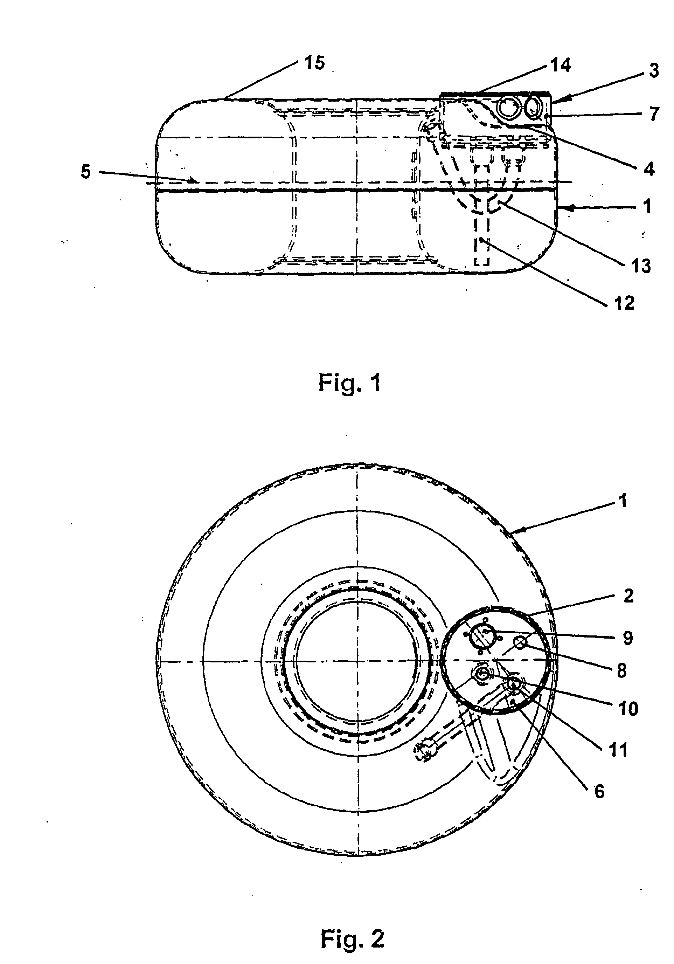

The object of the invention has been described in the enclosed drawing where Fig. 1 represents the side view of the toroidal tank and Fig.2 represents the plan view of the toroidal tank.

The toroidal tank, according to the invention, features the outline minimized to the maximum extent to fit the installation space. The valve block is constructed as to provide for safe and functional installation of the elements required for the operation of automotive vehicle with such fuel as propane butane liquid gas.

The toroidal tank, according to the invention, features the plane 1, the casing with the opening 2 for the valve block 3.
The rim of the opening 2 has a distinctive bottom part 4, which is horizontal and parallel to the horizontal axis 5 of the tank.

The valve block 3 consists of the box with the bottom 6 uniform with its side cylindrical surface 7.

In the bottom part 6 of the valve block 3, four openings are made for individual valves, especially a refueling valve 8, a safety valve 9, a fuel intake valve 10 and the fuel level gauge valve 11

From the fuel intake valve 10 to the bottom of the tank, a vertical pipe 12 has been fixed, while the safety pipe 13 whose free end is situated approximately in the middle height of the valve block 3 diverges from the security valve 9,.

The side surface 7 of the valve block 3 has ventilation openings.

The valve block 3 is covered with a lid 14 whose inside surface is even or maximum 6mm higher than the top plane 15.

## Claims

1. A toroidal tank with an opening for the valve block, which consists of a uniform box with an opening in its bottom with a cylindrical side surface with the rim of the opening made in the tank casing **characterized by** (6) the bottom of the valve block (3) equipped with four separate openings (8),(9),(10),(11) for installation of valves, especially a refueling valve, a safety valve, a fuel intake valve and a fuel level gauge valve.

2. A toroidal tank, as per Claim 1, **characterized by** a rim (2) of the opening in the tank casing for connection with the valve block, with a protruding bottom part (4) which is horizontal and parallel to the horizontal axis (5) of the tank.

3. A toroidal tank, as per Claim 1, **characterized by** a side wall (7) of the valve block (3) with ventilation holes.

4. A toroidal tank, as per Claim 1, **characterized by** a cover (14) of the valve block (3) which is even or slightly higher than the horizontal top plane (15) of the tank.

5. A toroidal tank, as per Claim 1, featuring the bottom (6) of the valve block with a vertical pipe (12) for fuel intake reaching approximately the bottom of the tank and fixed to the fuel intake valve (10), and equipped with a bended pipe (13) which is the pipe of the safety valve (9) and its free end is situated approximately in the middle of the tank valve (3) height.
